# EUROPÄISCHE PATENTSCHRIFT

(11) **EP 3 804 093 B1**
(45) Veröffentlichungstag und Bekanntmachung des Hinweises auf die Patenterteilung: **10.07.2024**
(21) Anmeldenummer: 19728629.7
(22) Anmeldetag: 29.05.2019
(51) Int. Cl.: H02K 1/278, H02K 5/167, H02K 7/14, H02K 15/03, H02K 5/128

(54) **ELEKTRISCHER ANTRIEBSMOTOR, NASSLÄUFER-PUMPE UND HAUSHALTSGERÄT**
ELECTRIC DRIVE MOTOR, GLANDLESS PUMP AND HOUSEHOLD APPLIANCE
MOTEUR D'ENTRAÎNEMENT ÉLECTRIQUE, POMPE À ROTOR NOYÉ ET APPAREIL MÉNAGER

(30) Priorität: 05.06.2018 DE 102018208820
(43) Veröffentlichungstag der Anmeldung: 14.04.2021
(73) Patentinhaber: BSH Hausgeräte GmbH, 81739 München (DE)
(72) Erfinder: KALAVSKY, Michal, 04023 Kosice (SK)
(86) Internationale Anmeldenummer: PCT/EP2019/064073
(87) Internationale Veröffentlichungsnummer: WO 2019/233874

(56) Entgegenhaltungen:
- DE-A1- 10 251 461
- DE-A1- 102008 029 515
- DE-A1- 102014 204 319
- DE-A1- 102017 210 734
- JP-A- 2000 287 430
- JP-A- 2018 078 678

## Beschreibung

Die Erfindung betrifft einen elektrischen Antriebsmotor, aufweisend einen Stator mit wenigstens einer elektrisch ansteuerbaren Statorwicklung, und einen im Feld der wenigstens einen ansteuerbaren Statorwicklung unter Belassen eines Ringspaltes drehantreibbar gelagerten Rotor, aufweisend eine Motorwelle und einen Magnetträger, welcher koaxial zu der Motorwelle angeordnet ist und wenigstens einen Permanentmagneten aufweist, welcher auf einem Außenumfang des Magnetträgers angeordnet ist. Die Erfindung betrifft außerdem eine zugehörige Nassläufer-Pumpe und ein Haushaltsgerät aufweisend einen solchen elektrischen Antriebsmotor.

Die DE 10 2014 202 572 A1 beschreibt einen elektrischen Antriebsmotor für eine Pumpe, aufweisend eine elektrisch ansteuerbare Statorwicklung und einen im Feld der Statorwicklung unter Belassen eines Ringspaltes drehantreibbar gelagerten Rotor, der eine Motorwelle, einen auf der Motorwelle sitzenden Magnetträger und mehrere um wenigstens eine Mantelfläche des Magnetträgers verteilt angeordnete Permanentmagnete aufweist, die jeweils wenigstens eine Außenoberfläche aufweisen und die mittels eines durch Umspritzen des Magnetträgers hergestellten Kunststoffkörpers an dem Magnetträger befestigt sind, wobei die Permanentmagnete an ihren dem Ringspalt zugewandten Außenoberfläche durch den Kunststoffkörper derart form- und/oder kraftschlüssig gehalten sind, dass zumindest ein Teil dieser Außenoberflächen freiliegt.

Die DE 10 2016 219 974 B3 beschreibt einen elektrischen Antriebsmotor, aufweisend einen Stator mit Polschuhen und wenigstens einer elektrisch ansteuerbaren Statorwicklung, und einen im Feld der Statorwicklung unter Belassen eines Ringspaltes drehantreibbar gelagerten Permanentmagnetenrotor, der eine Motorwelle und einen auf der Motorwelle sitzenden, in einem als Spritzgussteil hergestellten Magnetenträger aufweist, an dem mehrere separate Permanentmagnete über einen Umfang verteilt angeordnet sind, wobei der Permanentmagnetenrotor eine Spannvorrichtung aufweist, die ausgebildet ist, zum Drücken der mehreren Permanentmagnete in radialen Richtungen nach außen gegen eine Innenwand einer Kavität einer Spritzgießform des Magnetenträgers, während des Spritzgießens des Magnetenträgers.

Weiterer druckschriftlicher Stand der Technik ist in der DE 102 51 461 A1, DE 10 2014 204319 A1, JP 2018 078678 A und in der JP 2000 287430 A gezeigt.

Die Aufgabe der Erfindung ist es, einen elektrischen Antriebsmotor mit einem Rotor, der wenigstens einen Permanentmagneten aufweist, zu schaffen, dessen bauliche Komplexität und dessen Fertigungskosten optimiert sind, sodass eine günstige und einfache Fertigung möglich ist.

Die Aufgabe wird erfindungsgemäß gelöst durch einen elektrischen Antriebsmotor mit den Merkmalen des Patentanspruchs 1, aufweisend einen Stator mit wenigstens einer elektrisch ansteuerbaren Statorwicklung, und einen im Feld der wenigstens einen ansteuerbaren Statorwicklung unter Belassen eines Ringspaltes drehantreibbar gelagerten Rotor, aufweisend eine Motorwelle und einen Magnetträger, welcher koaxial zu der Motorwelle angeordnet ist und wenigstens einen Permanentmagneten aufweist, welcher auf einem Außenumfang des Magnetträgers angeordnet ist, wobei die Motorwelle und der Magnetträger einteilig ausgebildet sind, in dem die Motorwelle und der Magnetträger gemeinsam aus einem einzelnen Ausgangsblech durch Umformen zu einem einteiligen Rotorformkörper hergestellt sind.

Der wenigstens eine Permanentmagnet kann als ein Dauermagnet ausgebildet sein. Der Dauermagnet kann ein hartmagnetisches Material aufweisen, durch welches ein dauerhaftes magnetisches Feld bereitgestellt werden kann. Der wenigstens eine Permanentmagnet kann einstückig oder mehrteilig ausgebildet sein und kann insbesondere aus hartmagnetischen Ferriten hergestellt sein. Generell sind im Falle mehrerer Permanentmagnete diese Permanentmagnete vorzugsweise alle identisch ausgebildet. Die mehreren Permanentmagnete können jeweils eine kreisringsektorförmige Gestalt aufweisen.

Das Feld ist ein als magnetisches Feld ausgebildeter Bereich, welcher durch magnetisches Material und/oder durch elektrische Ströme erzeugt wird. Das Feld kann von dem Stator erzeugt auf den wenigstens einen Permanentmagneten des drehantreibbar gelagerten Rotors magnetisch einwirken. Durch die magnetische Wirkung des Feldes auf den wenigstens einen Permanentmagneten des drehantreibbar gelagerten Rotors kann eine gesteuerte Kreisbewegung des Rotors bzw. der Motorwelle des drehantreibbar gelagerten Rotors erzeugt werden.

Der Magnetträger des elektrischen Antriebsmotors kann einen oder mehrere gleichmäßig über einen Umfang verteilt angeordnete Permanentmagnete aufweisen, die auf dem Magnetträger befestigt sind. Die Permanentmagnete können über den Umfang des Magnetträger gleichmäßig verteilt angeordnet sein. Insoweit können sich die über den Umfang des Magnetträgers gleichmäßig verteilt angeordneten Permanentmagnete abgesehen von geringfügigen Spalten zu einem umlaufenden, mehrstückig zusammengesetzten Magnetring ergänzen.

Der Ringspalt beschreibt den Bereich des elektrischen Antriebsmotors, welcher den Abstand des Stators zu dem drehantreibbar gelagerten Rotor bildet. Dieser Bereich sollte vorzugsweise einen geringen Abstand des Stators zum drehantreibbar gelagerten Rotor aufweisen, sodass das Feld des Stators einen direkten Einfluss auf die Permanentmagneten des Magnetträgers des drehantreibbar gelagerten Rotors nehmen kann.

Der Stator stellt den unbeweglichen Teil des elektrischen Antriebsmotors dar, welcher eine vorgegebene Anzahl von Polschuhen, d.h. Statorpole aufweist. Der Stator kann wenigstens zwei oder mehr Statorpole aufweisen, welche eine in der Nutzung unveränderliche Position am Stator aufweisen. Die Statorpole können elektrisch ansteuerbare Statorwicklungen aufweisen, sodass der drehantreibbar gelagerte Rotor in eine Dreh- und Kreisbewegung versetzt werden kann.

Der drehantreibbar gelagerte Rotor stellt den beweglichen Teil des elektrischen Antriebsmotors dar, welcher den Magnetträger aufweist der den wenigstens einen Permanentmagneten aufweist. Der drehantreibbar gelagerte Rotor kann eine einseitige Lagerung aufweisen, welche eine in dem Ringspalt durchgeführte Drehbewegung ermöglicht. Die Lagerung des drehantreibbar gelagerten Rotors kann z.B. ein einziges Radial-Gleitlager aufweisen, das ausgebildet sein kann, den drehantreibbar gelagerten Rotor nicht nur radial, sondern insbesondere auch in einer axialen Richtung abzustützen.

Als Umformen wird ein Fertigungsverfahren verstanden, welches insbesondere die Umformtechniken des Walzens, des Freiformschmiedens, des Gesenkschmiedens, des Fließpressens, des Strangpressens, des Tiefziehens und des Biegens umfasst. Dabei wird ein Ausgangswerkstoff durch die unterschiedlichen Fertigungsverfahren in seiner Form angepasst, welches ein Maß an Plastizität voraussetzt. Erfindungsgemäß wird das Fertigungsverfahren des Tiefziehens zum Umformen verwendet.

Das Ausgangsblech weist die Möglichkeit der plastischen Veränderung ohne Verlust des Materialzusammenschlusses auf, sowie ergänzend die Fähigkeit magnetische Energie zu leiten. Der einteilige Rotorformkörper ist demgemäß aus dem Ausgangsblech, insbesondere einem einstückigen, flachen Ausgangsblech, tiefgezogen und der umgeformte einteilige Rotorformkörper bildet dabei die Motorwelle und den Magnetträger.

Das Merkmal, des einteiligen Rotorformkörpers, welcher mittels einer Lagerung drehbar gelagert ist, sodass ein Motorwellenabschnitt an einem axial zwischen dem ersten Endabschnitt des Motorwellenabschnitts und dem zweiten Endabschnitt des Motorwellenabschnitts angeordneten Zwischenabschnitt den Motorwellenabschnitt trägt, bedeutet insbesondere, dass die in dem Zwischenabschnitt des Motorwellenabschnitts angeordnete Lagerung die einzige Lagerung sein kann, welche den Motorwellenabschnitt drehbar lagert. Der Motorwellenabschnitt kann demgemäß ausschließlich durch diese einzige Lagerung, welche den Motorwellenabschnitt an seinem Zwischenabschnitt trägt, insbesondere gegenüber einem Motorgehäuse drehbar geführt und drehbar gelagert sein. Der einteilige Rotorformkörper kann insoweit nur einseitig gelagert sein.

Durch das Fertigungsverfahren des Umformens wird aus einem Ausgangsblech der einteilige Rotorformkörper hergestellt, welcher die Motorwelle und den Magnetträger einteilig bildet. Indem die Motorwelle und der Magnetträger einteilig ausgebildet sind, wobei die Motorwelle und der Magnetträger gemeinsam aus einem einzelnen Ausgangsblech durch Umformen zu einem einteiligen Rotorformkörper hergestellt sind, kann die Komplexität der Montage des elektrischen Antriebes verringern und/oder die Fertigungskosten optimiert werden.

Der einteilige Rotorformkörper weist einen durch Tiefziehen gebildeten Motorwellenabschnitt und einen durch das Tiefziehen gebildeten Magnetträgerabschnitt auf.

Das Fertigungsverfahren des Tiefziehens beschreibt die Änderung eines vorzugsweise ebenen Ausgangsbleches, welches im Rahmen der Erfindung als ein Grundwerkstoff verstanden werden kann. Der Grundwerkstoff kann durch Zug und/oder Druck einseitig oder beidseitig umgeformt werden. Der Prozess des Tiefziehens kann dabei durch ein Werkzeug, durch ein Wirkmedium wie z.B. Wasser und/oder durch eine Wirkenergie wie z.B. magnetische Energie insbesondere durch ein Werkzeug umgesetzt werden. Durch den Prozess des Tiefziehens kann der Grundwerkstoff, welcher auch als Halbzeug verstanden werden kann, in eine definierte Form gebracht werden, welche insbesondere durch das Werkzeug vorgegeben werden kann. Nach dem eigentlichen Prozess des Tiefziehens können ergänzend durch Stanzen oder Schneiden beispielsweise Sicken, Kiemen, Öffnungen und/oder Durchbrüche in das umgeformte Halbzeug eingebracht werden.

Der Motorwellenabschnitt bildet eine Motorwelle welche einteilig mit dem Magnetträgerabschnitt, welcher einen Magnetträger bildet, verbunden ist. Der Motorwellenabschnitt kann zur Kraftübertragung genutzt werden. Der Magnetträgerabschnitt kann zur Aufnahme von Permanentmagneten genutzt werden.

Der einteilige Rotorformkörper weist durch das Tiefziehen einen Verbindungsabschnitt auf, welcher den Motorwellenabschnitt mit dem Magnetträgerabschnitt einteilig verbindet.

Der Verbindungsabschnitt stellt den Bereich zwischen dem Motorwellenabschnitt und dem Magnetträgerabschnitt dar, welcher aufgrund des Fertigungsverfahrens den einteiligen Rotorformkörper ausbildet. Durch die erfindungsgemäße Ausführung des Herstellens des einteiligen Rotorformkörpers kann ein drehantreibbar gelagerter Rotor geschaffen werden, welcher durch seine einteilige Bauform aus dem Magnetträgerabschnitt, dem Motorwellenabschnitt und dem Verbindungsabschnitt eine Montage eines drehantreibbar gelagerten Rotors aus separaten Komponenten des drehantreibbar gelagerten Rotors unnötig macht.

Der Motorwellenabschnitt kann mit dem Magnetträgerabschnitt an einem axialen Stirnende des einteiligen Rotorformkörpers verbunden sein und der Magnetträgerabschnitt kann sich dabei ausgehend von diesem axialen Stirnende zumindest im Wesentlichen koaxial zur Achse des Motorwellenabschnitts erstrecken.

Der Motorwellenabschnitt bildet ein erstes offenes Ende aus, auf welchen ein anzutreibendes Bauteil, wie beispielsweise ein Pumpenrad befestigt werden kann und/oder an dem ein Lager angeordnet sein kann. Der Motorwellenabschnitt bildet außerdem ein dem ersten offenen Ende gegenüberliegendes zweites Ende aus, welches einteilig in einen Verbindungsabschnitt übergehen kann. Der Verbindungsabschnitt bildet eine einteilige Verbindung mit dem Magnetträgerabschnitt, welcher sich koaxial zum Motorwellenabschnitt in Richtung des ersten Endes des Motorwellenabschnittes erstreckt. Der Motorwellenabschnitt, der Verbindungsabschnitt und der Magnetträgerabschnitt bilden den einteiligen Rotorformkörper.

Der elektrische Antriebsmotor kann einen separat hergestellten magnetisch leitenden Zusatzring aufweisen, welcher auf der Oberfläche des Magnetträgerabschnitts befestigt sein kann und auf dem der wenigstens eine Permanentmagnet angeordnet wird. Die Verwendung eines separat hergestellten magnetisch leitenden Zusatzrings kann besonders dann zweckmäßig, wenn beispielsweise die Permanentmagnete derart magnetisiert sind, dass ein Joch als ein Rückschlusseisen nötig ist. Alternativ oder ergänzend kann die Verwendung eines separat hergestellten magnetisch leitenden Zusatzring besonders dann zweckmäßig sein, wenn der umgeformte, insbesondere tiefgezogene Rotorformkörper aus einem Nichteisenmetall, wie beispielsweise Aluminium bzw. dessen Legierungen hergestellt ist.

Der magnetische leitende Zusatzring kann einstückig ausgebildet sein oder aus mehreren Teilstücken zusammengesetzt sein, insbesondere aus Flachmaterial gebogen sein. Der magnetische leitende Zusatzring kann insbesondere die Gestalt eines geraden Hohl-Kreiszylinders aufweisen.

Im Rahmen der Erfindung kann es möglich sein unterschiedliche Ausführungsvarianten des magnetischen Zusatzringes zu verwenden. In einer ersten Ausführungsvariante kann der magnetisch leitende Zusatzring eine axial größere Mantelfläche aufweisen als der Magnetträgerabschnitt. In einer zweiten Ausführungsform kann der magnetisch leitende Zusatzring eine axial kleinere Mantelfläche aufweisen als der Magnetträgerabschnitt. In einer dritten Ausführungsform kann der magnetisch leitende Zusatzring eine axial gleich große Mantelfläche wie der Magnetträgerabschnitt aufweisen. Unabhängig der verwendeten Ausführungsform kann der wenigstens eine Permanentmagnet auf dem magnetisch leitenden Zusatzring angeordnet und der magnetisch leitende Zusatzring auf dem Magnetträgerabschnitt befestigt werden.

Der magnetisch leitende Zusatzring kann durch Kleben oder Umspritzen mithilfe von Kunststoff auf dem Magnetträger befestigt werden. Es ist möglich den magnetisch leitenden Zusatzring unabhängig der Ausführungsvarianten axial über die Mantelfläche des Magnetträgers hinausragend auf dem Magnetträger aufzubringen.

Der magnetisch leitende Zusatzring kann z.B. die mechanische Festigkeit des Rotorformkörpers erhöhen, als Magnetjoch ausgebildet sein, insbesondere falls ein Dipolmagnet verwendet wird, oder je nach Ausführungsform die Aufnahme von großflächigeren Permanentmagneten ermöglichen.

Der wenigstens eine Permanentmagnet kann durch Kleben mittels eines Klebstoffes, insbesondere eines magnetischen Klebstoffes auf dem Magnetträgerabschnitt befestigt sein. Der magnetische Klebstoff kann beispielsweise ein aus dem flüssigen Zustand aushärtendes Bindemittel aufweisen, in dem metallische Partikel eingebunden sind.

Der magnetische Klebstoff kann ein Klebstoff sein, welcher über Oberflächenhaftung und/oder Adhäsion bzw. Kohäsion Werkstoffe formschlüssig verbinden kann, wodurch ein Verbundwerkstoff entsteht. Dabei kann es sich bei dem Klebstoff insbesondere um einen physikalisch abbindenden Klebstoff, einen chemisch härtenden Klebstoff oder um einen Klebstoff ohne Verfestigungsmechanismus handeln. Der magnetische Kleber kann ergänzend zu dem Klebstoff noch Partikel aufweisen, welche beispielsweise magnetische Eigenschaften besitzen. Die Partikel können ein Aufbringen verbessern und/oder das Klebeverhalten des magnetischen Klebstoffes beim Verbinden von magnetischen Werkstoffen, d.h. der Permanentmagnete mit dem Rotor verbessern.

Der wenigstens eine Permanentmagnet kann durch das Fertigungsverfahren des Klebens auf dem Magnetträgerabschnitt aufgebracht werden, dazu kann stoffschlüssig der wenigstens eine Permanentmagnet auf dem Magnetträgerabschnitt aufgebracht werden, sodass eine feste Verbindung den wenigstens einen Permanentmagneten mit dem Magnetträgerabschnitt verbindet.

Der Magnetträgerabschnitt und/oder der magnetisch leitende Zusatzring kann wenigstens eine Tasche und/oder eine Aussparung aufweisen, die einen Strömungskanal bildet zum Fördern von Kunststoffmaterial in einen Spalt zwischen einer äußeren Mantelwand Magnetträgerabschnitts und der dem Magnetträgerabschnitt zugewandten Rückseite des wenigstens einen Permanentmagneten während eines Umspritzens des einteiligen Rotorformkörpers mit dem Kunststoffmaterial. Indem mittels der wenigstens einen Tasche und/oder der wenigstens einen Aussparung während eines Umspritzens des einteiligen Rotorformkörpers das Kunststoffmaterial in den Spalt zwischen einer äußeren Mantelwand des Magnetträgerabschnitts und der dem Magnetträgerabschnitt zugewandten Rückseite des wenigstens einen Permanentmagneten fließen kann bzw. gedrückt werden kann, drückt während des Umspritzvorgangs das noch fließfähige Kunststoffmaterial den wenigstens einen Permanentmagneten radial nach außen, insbesondere gegen eine Innenwand einer Spritzgießform. Dadurch kann beispielsweise bei Verwendung mehrerer Permanentmagneten verhindert werden, oder zumindest weitgehend vermieden werden, dass die äußeren Mantelflächen der Permanentmagnete von dem Kunststoffmaterial bedeckt werden. Da aufgrund des Vordruckes im Spalt die Permanentmagnete radial nach außen gedrückt werden, liegen die Permanentmagnete mit ihren äußeren Mantelflächen bündig an der Innenwand der Spritzgießform an und kein Kunststoffmaterial kann zwischen den äußeren Mantelflächen der Permanentmagnete und der Innenwand der Spritzgießform gelangen. Nach einem Erhärten des Kunststoffmaterials ist der wenigstens eine Permanentmagnet oder sind die mehreren Permanentmagnete stoffschlüssig an der äußeren Mantelwand des einteiligen Rotorformkörpers bzw. des Magnetträgerabschnitts gehalten.

Der wenigstens eine Permanentmagnet kann durch Umspritzen des einteiligen Rotorformkörpers mittels eines Kunststoffmaterials auf dem Magnetträgerabschnitt befestigt sein.

Das Umspritzen kann zum Befestigen der Permanentmagneten genutzt werden. Dabei wird das Kunststoffmaterial teilweise um die Permanentmagnete und mithilfe der wenigstens einen Tasche und/oder Aussparung unter die Permanentmagnete gespritzt. Dadurch kann ein gleichbleibender Abstand der Permanentmagneten zum Stator bzw. im Ringspalt sichergestellt werden, sowie ein fester Sitz der Permanentmagneten auf dem Magnetträgerabschnitt.

Der einteilige Rotorformkörper kann wenigstens einen stirnseitigen Durchbruch aufweisen, welcher eine Überströmöffnung bildet, die ausgebildet ist zum Überströmen von Kunststoffmaterial von einer Seite des einteiligen Rotorformkörpers zu einer gegenüberliegenden Seite des einteiligen Rotorformkörpers während eines Umspritzens des einteiligen Rotorformkörpers mit dem Kunststoffmaterial.

Der wenigstens eine Durchbruch kann als ein Loch ausgebildet sein, welches eine Öffnung aufweist die eine beliebige geometrische Form aufweisen kann. Insbesondere kann das Loch die geometrische Form einer Ellipse aufweisen, welche gerade oder gebogen sein kann.

Der wenigstens eine Durchbruch weist die Funktion einer Überströmöffnung oder eines Strömungskanals auf, da der Durchbruch den Durchfluss von Kunststoffmaterial von einer Seite des einteiligen Rotorformkörpers zu einer anderen Seite des einteiligen Rotorformkörpers ermöglicht.

Der Motorwellenabschnitt kann ein freies Wellenende aufweisen, dass zur Lagerung eines Laufrades auf dem Motorwellenabschnitt ausgebildet ist und eine Rändelung und/oder wenigstens eine Abflachung an der Mantelwand des Wellenendes aufweist, zur drehfesten Lagerung des Laufrades auf dem Motorwellenabschnitt.

Die Rändelung ist als eine kreuzlinienförmige Einprägung der Oberfläche des Motorwellenabschnittes ausgebildet und z.B. durch Fräsen, Drücken oder Einprägen auf dem Motorwellenabschnitt aufgebracht. Dabei soll die Rändelung den Reibungskoeffizient des Motorwellenabschnittes erhöhen, sodass ein Verrutschen eines anzutreibenden Bauteils, wie insbesondere ein Pumpenrad, welches auf dem Motorwellenabschnitt aufgebracht wird, verhindert wird.

Die Abflachung ist als eine Modifikation der Oberflächenkontur des Motorwellenabschnittes ausgebildet und verändert die im Querschnitt kreisrunde Form des Motorwellenabschnittes zu einem Kreisabschnitt oder zwei Kreisabschnitten entsteht. Die Modifikation des Motorwellenabschnittes soll ein Verrutschen des anzutreibenden Bauteils, wie insbesondere des Pumpenrads verhindern, welche auf dem Motorwellenabschnitt aufgebracht ist.

Das Ausgangsblech, welches den einteiligen Rotorformkörper bildet, kann magnetisch leitende Eigenschaften aufweisen.

Das Ausgangsblech kann insbesondere weichmagnetische Materialien aufweisen, welche sich in einen Magnetfeld leicht magnetisieren lassen bzw. ein äußeres Magnetfeld verstärken. Im Rahmen der Erfindung kann durch ein Ausgangsblech bestehend aus weichmagnetischen Materialien, welches den einteiligen Rotorformkörper bildet, ein Magnetfeld des wenigstens einen Permanentmagneten, welcher auf dem Magnetträgerabschnitt des einteiligen Rotorformkörpers angeordnet ist, verstärken.

Der Motorwellenabschnitt kann als eine Hohlwelle ausgebildet sein, die zur Bildung eines koaxialen Strömungskanals an den gegenüberliegenden Wellenenden des Motorwellenabschnitts jeweils eine Öffnung aufweist.

Die Hohlwelle kann als ein Strömungskanal genutzt werden, durch den eine Flüssigkeit im Betrieb der Motorwelle und/ oder in Ruhe der Motorwelle durchfließen kann. Ein Durchfließen mit Flüssigkeit kann den elektrischen Antriebsmotor kühlen und/oder den Platzbedarf für Leitungen zum Ausleiten des Fördermaterials, insbesondere der Flüssigkeit, ermöglichen.

Die Aufgabe wird außerdem gelöst, durch eine Nassläufer-Pumpe mit den Merkmalen des Patentanspruchs 10, aufweisend eine Pumpenkammerwand, die einen Nassraum der Nassläufer-Pumpe begrenzt, ein im Nassraum drehbar gelagertes Pumpenrad und einen das Pumpenrad antreibenden elektrischen Antriebsmotor, wie nach einem oder mehreren der beschriebenen Ausführungsformen.

Unter einer Nassläufer-Pumpe kann insbesondere im Rahmen der Erfindung ein Pumpenaggregat verstanden werden, welches neben einem Pumpenrad und einem Pumpengehäuse außerdem einen elektrischen Antriebsmotor, insbesondere einen bürstenlosen Gleichstrommotor, umfasst, dessen drehantreibbar gelagerte Rotor oder Rotorformkörper sich in dem flüssigen Fördermedium dreht. Das Fördermedium ist dabei die von dem Pumpenrad der Nassläufer-Pumpe geförderte Flüssigkeit. Beispielsweise im Falle einer Geschirrspülmaschine als Haushaltsgerät kann das Fördermedium die sogenannte Spülflotte sein. Beispielsweise im Falle einer Waschmaschine als Haushaltsgerät kann das Fördermedium die sogenannte Waschlauge sein. Bei der Nassläufer-Pumpe wird demgemäß der sich in dem Fördermedium drehende drehantreibbar gelagerte Rotor oder Rotorformkörper mittels der Pumpenkammerwand flüssigkeitsdicht von dem Stator des elektrischen Antriebsmotors getrennt. Der Stator befindet sich insoweit in einem trockenen Bereich der Nassläufer-Pumpe, also hydraulisch getrennt von dem Nassraum, in dem der drehantreibbar gelagerte Rotor dreht.

Durch das beispielsweise Radial-Gleitlager ist die Motorwelle oder der Motorwellenabschnitt in einer exakten koaxialen Position zur Pumpenkammerwand und dem Stator festgelegt. Die Lagerung umfängt dazu den Zwischenabschnitt der Motorwelle oder den Motorwellenabschnitt vollständig. Aufgrund der Funktion des Pumpenrades wird bei der Drehung des Pumpenrades und damit bei der Drehung der Motorwelle oder der Motorwellenabschnitt durch das in dem Fördermedium insbesondere innerhalb des Nassraumes angeordneten Pumpenrades eine axiale Kraft in eine axiale Richtung auf die Motorwelle oder dem Motorwellenabschnitt eingeleitet. Diese axiale Kraft in eine axiale Richtung wird durch das Axiallager aufgenommen.

Die Lagerung kann im Falle der Nassläufer-Pumpe ein mit der Pumpenkammerwand der Nassläufer-Pumpe fest verbundenes Lagerschild aufweisen, das einen Lagersitz trägt, an dem eine Lagerbuchse ausgebildet ist, welche eine Nabe umfasst, in welcher der Zwischenabschnitt der Motorwelle oder der Motorwellenabschnitt drehbar gelagert ist.

Das Lagerschild kann als ein von der Pumpenkammerwand und/oder von dem Pumpengehäuse separates Bauteil ausgebildet sein, wobei das Lagerschild in einen kreiszylindrischen Innensitz eingesetzt, insbesondere eingepresst sein kann. Das Lagerschild kann insoweit als ein separates Bauteil mit der Pumpenkammerwand fest verbunden sein.

Das Pumpengehäuse oder ein Gehäuseteil eines mehrteiligen Pumpengehäuses kann die Pumpenkammerwand aufweisen. Die kann bedeuten, dass die Pumpenkammerwand als ein separates Bauteil an dem Pumpengehäuse oder dem Gehäuseteil befestigt ist. Alternativ kann dies bedeuten, dass die Pumpenkammerwand einteilig mit dem Pumpengehäuse oder mit dem Gehäuseteil ausgebildet ist. Im Bereich des Stators und des drehantreibbar gelagerten Rotors oder des Rotorformkörpers kann die Wandstärke der Pumpenkammerwand besonders gering ausgeführt sein. Die Pumpenkammerwand erstreckt sich dabei insoweit durch den Ringspalt, welcher den Stator von dem drehantreibbar gelagerten Rotor oder dem Rotorformkörper trennt und in dem das Feld des elektrischen Antriebsmotors funktionsgemäß wirkt.

Der Lagersitz des Lagerschilds kann eine kreiszylindrische Innenwand aufweisen und die Lagerbuchse kann dabei eine zur kreiszylindrischen Innenwand des Lagerschilds korrespondierende kreiszylindrische Außenmantelwand aufweisen, die derart ausgebildet ist, dass die Lagerbuchse passgenau in den Lagersitz eingefügt ist.

Das Lagerschild kann eine Zwischenwand bilden, welche einen ersten Teilraum des Nassraums, in dem der drehantreibbar gelagerte Rotor oder der Rotorformkörper angeordnet ist, von einem zweiten Teilraum des Nassraums, in dem das Pumpenrad angeordnet ist, separiert. Insoweit sind sowohl der erste Teilraum, als auch der zweite Teilraum von dem Fördermedium durchströmt. Dazu kann der Strömungskanal der hohlen Motorwelle das Fördermedium aus dem ersten Teilraum in den zweiten Teilraum transportieren.

Das Pumpenrad kann auf dem Wellenende des Motorwellenabschnitts des einteiligen Rotorformkörpers befestigt sein.

Das Pumpenrad kann genutzt werden zur bewegenden Förderung von Flüssigkeiten. Dazu muss das Pumpenrad Schaufeln in einer Form aufweisen, welche eine bewegende Förderung der Flüssigkeiten ermöglichen.

Die Aufgabe wird außerdem gelöst, durch ein Haushaltsgerät mit den Merkmalen des Patentanspruchs 12, welches insbesondere eine Geschirrspülmaschine, eine Waschmaschine, ein Trockner oder eine Dunstabzugshaube sein kann, aufweisend einen elektrischen Antriebsmotor und/oder eine Nassläufer-Pumpe, wie nach einer oder mehreren der beschriebenen Ausführungsformen.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigt:
- Fig. 1: eine Explosionsdarstellung des Aufbaus eines beispielhaften elektrischen Antriebs;
- Fig. 2: eine Schnittdarstellung einer Nassläufer-Pumpe mit dem erfindungsgemäßen elektrischen Antriebsmotor;
- Fig. 3: eine Längsschnittdarstellung des erfindungsgemäß einteilig ausgebildeten Rotorformkörpers;
- Fig. 4: eine axiale Draufsicht auf den erfindungsgemäß einteilig ausgebildeten Rotorformkörper gemäß Fig. 3;
- Fig. 5: eine Explosionsdarstellung des einteilig ausgebildeten Rotorformkörpers und drei Permanentmagnete, welche gemeinsam ergänzend einen Magnetring bilden, der auf dem Rotorformkörper aufgebracht ist;
- Fig. 6: eine Längsschnittdarstellung des einteilig ausgebildeten Rotorformkörpers mit den Permanentmagneten, welche einen dreiteiligen Magnetring bilden;
- Fig. 7: eine Querschnittdarstellung des einteilig ausgebildeten Rotorformkörpers mit den Permanentmagneten, welche den dreiteiligen Magnetring bilden;
- Fig. 8: eine Längsschnittdarstellung einer alternativen Ausführungsform eines einteilig ausgebildeten Rotorformkörpers mit den Permanentmagneten, welche dreiteilig als Magnetring ausgebildet sind, und einem separat hergestellten magnetisch leitenden Zusatzring;
- Fig. 9: eine perspektivische Darstellung des einteilig ausgebildeten Rotorformkörpers mit einem als Hohlwelle ausgebildeten Motorwellenabschnitt, welche außerdem eine Abflachung an der Mantelwand des Wellenendes aufweist;
- Fig. 10: eine perspektivische Darstellung des einteilig ausgebildeten Rotorformkörpers gemäß Fig. 9 mit einem aufgesetzten Zusatzring,
- Fig. 11: eine Seitenansicht einer alternativen Ausführungsform eines einteilig ausgebildeten Rotorformkörpers, der an der Mantelwand des Wellenendes eine Rändelung aufweist, mit einem aufgesetzten Zusatzring, und
- Fig. 12: eine stirnseitige Draufsicht auf den Rotorformkörper gemäß Fig.11.

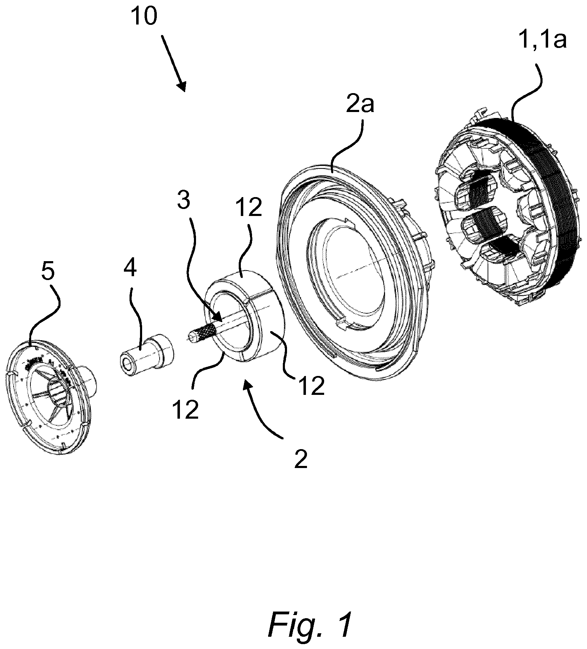

Die Fig. 1 zeigt den Aufbau eines beispielhaften elektrischen Antriebs 10. Der elektrische Antrieb 10 weist im Falle des vorliegenden Ausführungsbeispiels einen Stator 1 mit einer Staorwicklungen 1a auf. Der Stator 1 ist an einer Außenseite eines Rotorgehäuses 2a angeordnet, welches ausgebildet ist, einen Rotor 2 umfassend einen erfindungsgemäß einteiligen Rotorformkörper 3 im Inneren des ringförmigen Stators 1 aufzunehmen. Der einteilige Rotorformkörper 3 ist dargestellt in der Ausführungsform gemäß Fig. 1 mit beispielsweise drei Permanentmagneten 12. Die Welle des einteiligen Rotorformkörpers 3 sitzt in einer Gleitlagerbuchse 4. Der einteilige Rotorformkörper 3 und die Gleitlagerbuchse 4 sind im Rotorgehäuse 2a durch ein abschließendes Lagerendschild 5 in Position gehalten.

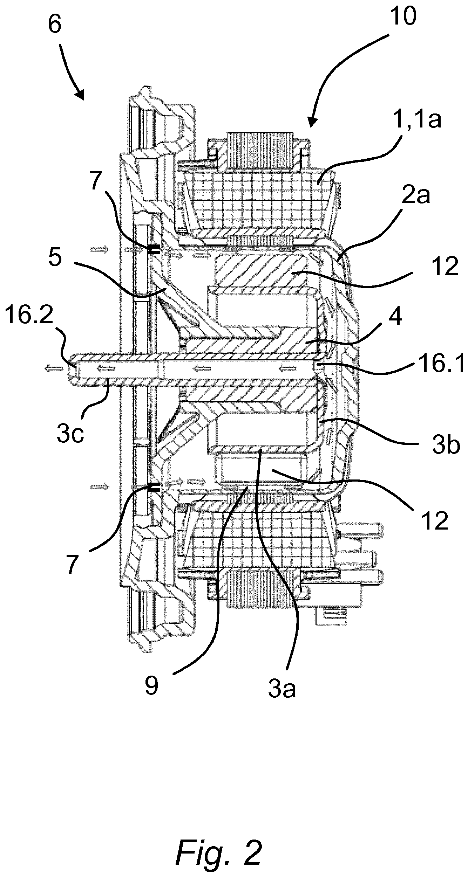

Die Fig. 2 zeigt eine Verwendung des elektrischen Antriebs 10 in einer Nassläufer-Pumpe 6. Die Nassläufer-Pumpe 6 weist den Stator 1 auf, der an einer Außenwand des Rotorgehäuses 2a befestigt ist. Innerhalb des Rotorgehäuses 2a ist der Rotor 2 mit seinem einteiligen Rotorformkörper 3 mittels der Gleitlagerbuchse 4 drehbar gelagert. Der einteilige Rotorformkörper 3 ist in der in Fig. 2 gezeigten Ausführungsform mit einem Motorwellenabschnitt 3c in Art einer Hohlwelle ausgebildet. Ein Lagerendschild 5 der Nassläufer-Pumpe 6 weist Lagerendschildöffnungen 7 auf, durch die eine Flüssigkeit in die Nasskammer 8 der Nassläufer-Pumpe 6 einströmt. An dem Lagerendschild 5 ist das den einteiligen Rotorformkörper 3 lagernde Gleitlagerbuchse 4 positioniert. Die Flüssigkeit durchströmt die Nasskammer 8, wie durch die Pfeile in Fig. 2 angedeutet, und gelangt über einen Ringspalt 9 zwischen den Permamentmagneten 12 und dem Rotorgehäuse 2a zu einer stirnseitigen Öffnung 16.1 der Hohlwelle des einteiligen Rotorformkörpers 3 und tritt nach durchfließen der Hohlwelle des einteiligen Rotorformkörpers 3 an der wellenendseitigen Öffnung der Hohlwelle des einteiligen Rotorformkörpers 3 wieder aus.

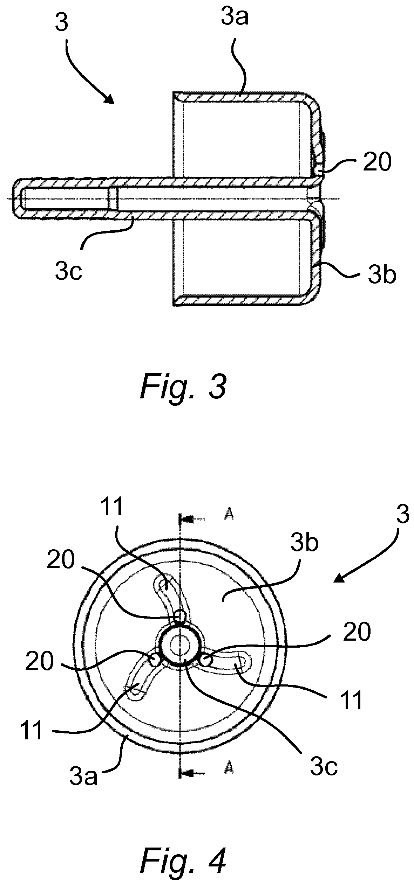

Die Fig. 3 zeigt den erfindungsgemäßen einteiligen Rotorformkörper 3, welcher einen Magnetträgerabschnitt 3a, einen Verbindungsabschnitt 3b und den Motorwellenabschnitt 3c aufweist. Der Verbindungsabschnitt 3b verbindet den Magnetträgerabschnitt 3a mit dem Motorwellenabschnitt 3c einteilig.

Die Fig. 4 zeigt die Stirnseite am Verbindungsabschnitt 3c des einteiligen Rotorformkörpers 3. Der Verbindungsabschnitt 3c weist im Falle des vorliegenden Ausführungsbeispiels beispielsweise drei bogenförmige, rinnenartige oder rillenartige Kanäle 11 auf, die in drei korrespondierende Löcher 20 münden, über die Flüssigkeit von außerhalb des einteiligen Rotorformkörpers 3 in das Innere des hohlzylindrischen Magnetträgerabschnitts 3a überströmen kann. In der Fig. 3 entspricht dies einem Überströmen von Flüssigkeit über das Loch 20 von der linken Seite des Verbindungsabschnitts 3b zu der rechten Seite des Verbindungsabschnitts 3b.

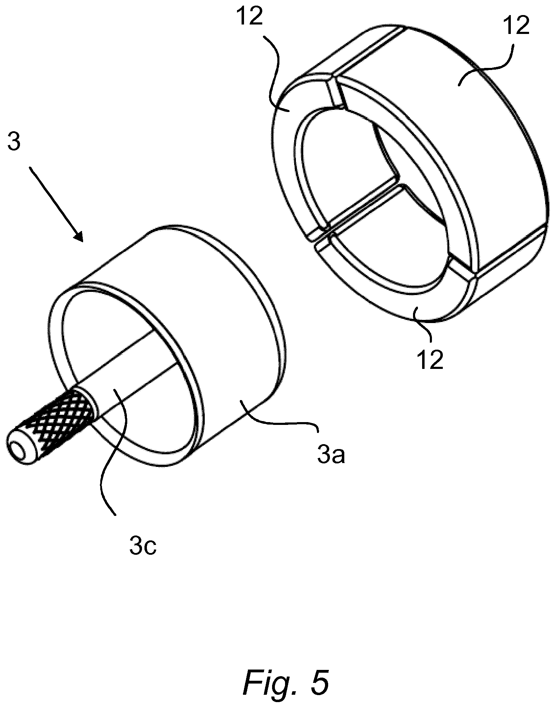

Die Fig. 5 zeigt einen beispielshaften Aufbau des einteiligen Rotorformkörpers 3 und des wenigstens einen Permanentmagneten in explodierter Darstellung, wobei die Permanentmagnete 12 zusammengesetzt einen Magnetring bilden.

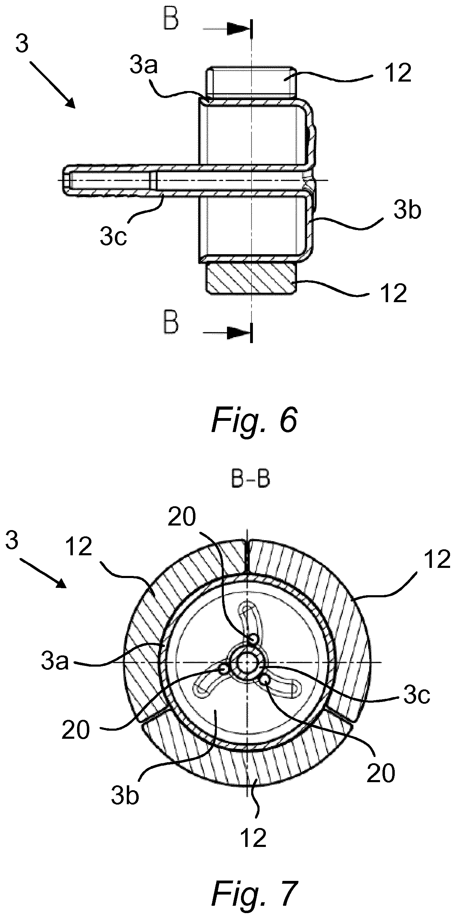

Die Fig. 6 zeigt in einer Schnittdarstellung den einteiligen Rotorformkörper 3, auf welchem die Permanentmagnete 12 angeordnet sind. Die Fig. 7 zeigt eine Schnittdarstellung des einteiligen Rotorformkörpers 3 gemäß Fig. 6, auf welchem die Permanentmagnete 12 angeordnet sind.

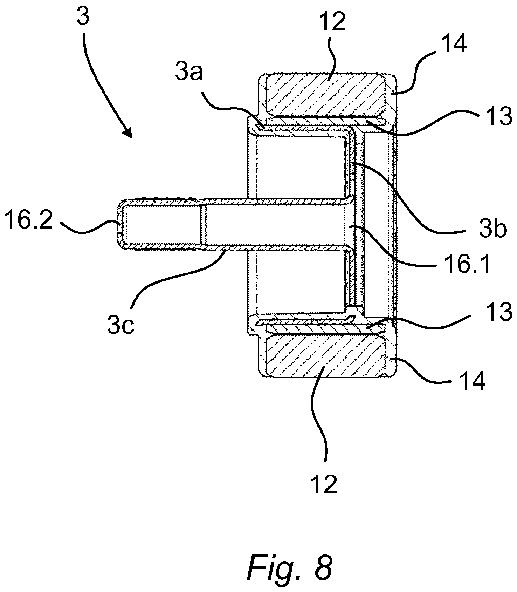

Die Fig. 8 zeigt eine alternative Ausführungsform eines einteiligen Rotorformkörpers 3, welcher den Magnetträgerabschnitt 3a, den Verbindungsabschnitt 3b und den Motorwellenabschnitt 3c aufweist. Der Verbindungsabschnitt 3b ist auch hierbei die einteilige Verbindung des Magnetträgerabschnitts 3a mit dem Motorwellenabschnitt 3c. Auf dem Magnetträgerabschnitt 3a ist jedoch ein zusätzlicher magnetisch leitender Zusatzring 13 angeordnet. Auf dem magnetisch leitenden Zusatzring 13 sind die Permanentmagnete 12 angeordnet. Der magnetisch leidende Zusatzring 13 weist eine axial größere Mantelfläche als der Magnetträgerabschnitt 3a auf, wodurch der magnetisch leitende Zusatzring stirnseitig über den Magnetträgerabschnitt hinausragt. Der Magnetträgerabschnitt 3a, der magnetisch leitende Zusatzring 13 und die Permanentmagnete 12 sind von einem Kunststoffmaterial 14 umspritzt.

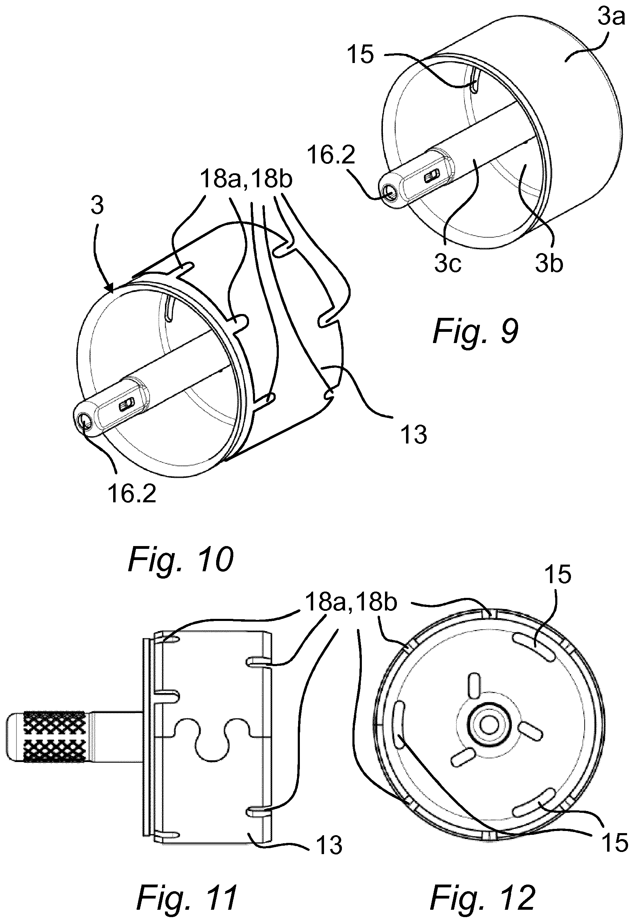

Die Fig. 9 zeigt den einteiligen Rotorformkörper 3, welcher einen sichtbaren Durchbruch 15 an dem Verbindungsabschnitt 3b aufweist. Wie insbesondere in Fig. 12 ersichtlich ist, können beispielsweise drei Durchbrüche 15 an dem Verbindungsabschnitt 3b vorgesehen sein, über die während eines Umspritzens des Rotorformkörpers 3 mit Kunststoffmaterial 14, dieses von außerhalb des einteiligen Rotorformkörpers 3 in das Innere des hohlzylindrischen Magnetträgerabschnitts 3a überströmen kann, um auch die Innenwand des Rotorformkörpers 3 umspritzen zu können. Der einteilige Rotorformkörper 3 ist außerdem mit einer Abflachung 17 an der Mantelwand des Wellenendes des Motorwellenabschnitts 3c versehen, die eine Drehsichtung für einen an dem Motorwellenabschnitts 3c zu befestigenden Bauteil, wie beispielsweise eines Pumpenrades bildet. Das Wellenende des Motorwellenabschnitts 3c weist außerdem im Falle des vorliegenden Ausführungsbeispiels die wellenseitige Öffnung 16.2 auf.

Die Fig. 10 zeigt den einteiligen Rotorformkörper 3 mit einem auf den Magnetträgerabschnitt 3a aufgepressten Zusatzring 13. Der Zusatzring 13 weist im Falle des vorliegenden Ausführungsbeispiels mehrere Taschen 18a bzw. Aussparungen 18b auf, über die während eines Umspritzens des Rotorformkörpers 3 mit Kunststoffmaterial 14, dieses Kunststoffmaterial 14 noch im flüssigen Zustand zwischen einer Außenmantelwand des Magnetträgerabschnitts 3a des einteiligen Rotorformkörpers 3 und den Permanentmagneten 12 eindringen kann, um die Permanentmagnete 12 während eines Umspritzens des Rotorformkörpers 3 innerhalb der Spritzgießform radial nach außen zu drücken, so dass die äußeren Mantelwände der Permanentmagnete 12 frei von Kunststoffmaterial 14 bleiben.

### BEZUGSZEICHENLISTE

- 1: Stator
- 1a: Statorwicklung
- 2: Rotor
- 2a: Rotorgehäuse
- 3: einteiliger Rotorformkörper
- 3a: Magnetträgerabschnitt
- 3b: Verbindungsabschnitt
- 3c: Motorwellenabschnitt
- 4: Gleitlagerbuchse
- 5: Lagerendschild
- 6: Nassläufer-Pumpe
- 7: Lagerendschildöffnungen
- 8: Nasskammer
- 9: Ringspalt
- 10: Antrieb
- 11: Kanäle
- 12: Permanentmagnete
- 13: magnetisch leitender Zusatzring
- 14: Kunststoffmaterial
- 15: Durchbruch
- 16.1: stirnseitige Öffnung
- 16.2: wellenendseitige Öffnung
- 17: Abflachung
- 18a: Taschen
- 18b: Aussparungen
- 20: Löcher

## Patentansprüche

1. Elektrischer Antriebsmotor (10), aufweisend einen Stator (1) mit wenigstens einer elektrisch ansteuerbaren Statorwicklung (1a), und einen im Feld der wenigstens einen ansteuerbaren Statorwicklung (1a) unter Belassen eines Ringspaltes (9) drehantreibbar gelagerten Rotor (2), aufweisend eine Motorwelle (3c) und einen Magnetträger (3a), welcher koaxial zu der Motorwelle (3c) angeordnet ist und wenigstens einen Permanentmagneten (12) aufweist, welcher auf einem Außenumfang des Magnetträgers (3a) angeordnet ist, wobei die Motorwelle (3c) und der Magnetträger (3a) einteilig ausgebildet sind, in dem die Motorwelle (3c) und der Magnetträger (3a) gemeinsam aus einem einzelnen Ausgangsblech durch Umformen zu einem einteiligen Rotorformkörper (3) hergestellt sind, **dadurch gekennzeichnet, dass** das Fertigungsverfahren des Tiefziehens zum Umformen verwendet wird und dass der einteilige Rotorformkörper (3) einen durch Tiefziehen gebildeten Motorwellenabschnitt (3c) und einen durch das Tiefziehen gebildeten Magnetträgerabschnitt (3a) aufweist, wobei der einteilige Rotorformkörper (3) einen durch das Tiefziehen gebildeten Verbindungsabschnitt (3b) aufweist, welcher den Motorwellenabschnitt (3c) mit dem Magnetträgerabschnitt (3a) einteilig verbindet.

2. Elektrischer Antriebsmotor (10) nach Anspruch 1, **dadurch gekennzeichnet, dass** der Motorwellenabschnitt (3c) mit dem Magnetträgerabschnitt (3a) an einem axialen Stirnende des einteiligen Rotorformkörpers (3) verbunden ist und sich der Magnetträgerabschnitt (3a) ausgehend von diesem axialen Stirnende zumindest im Wesentlichen koaxial zur Achse des Motorwellenabschnitts (3c) erstreckt.

3. Elektrischer Antriebsmotor (10) nach einem der Ansprüche 1 oder 2, aufweisend einen separat hergestellten magnetisch leitenden Zusatzring (13), welcher auf der Oberfläche des Magnetträgerabschnitts (3a) befestigt ist und auf dem der wenigstens eine Permanentmagnet (12) angeordnet ist.

4. Elektrischer Antriebsmotor (10) nach einem der Ansprüche 1 bis 3, **dadurch gekennzeichnet, dass** der wenigstens eine Permanentmagnet (12) durch Kleben mittels eines magnetischen Klebstoffes auf dem Magnetträgerabschnitt (3a) befestigt ist.

5. Elektrischer Antriebsmotor (10) nach einem der Ansprüche 1 bis 4, **dadurch gekennzeichnet, dass** der wenigstens eine Permanentmagnet (12) durch Umspritzen des einteiligen Rotorformkörpers (3) mittels eines Kunststoffmaterials (14) auf dem Magnetträgerabschnitt (3a) befestigt ist.

6. Elektrischer Antriebsmotor (10) nach einem der Ansprüche 1 bis 5, **dadurch gekennzeichnet, dass** der einteilige Rotorformkörper (3) wenigstens einen stirnseitigen Durchbruch (15) aufweist, welcher eine Überströmöffnung bildet, die ausgebildet ist, zum Überströmen von Kunststoffmaterial (14) von einer Seite des einteiligen Rotorformkörpers (3) zu einer gegenüberliegenden Seite des einteiligen Rotorformkörpers (3) während eines Umspritzens des einteiligen Rotorformkörpers (3) mit dem Kunststoffmaterial (14).

7. Elektrischer Antriebsmotor (10) nach einem der Ansprüche 1 bis 6, **dadurch gekennzeichnet, dass** der Magnetträgerabschnitt (3a) und/oder der magnetisch leitende Zusatzring (13) wenigstens eine Tasche (18a) und/oder eine Aussparung (18b) aufweist, die jeweils einen Strömungskanal bildet zum Fördern von Kunststoffmaterial (14) in einen Spalt zwischen einer äußeren Mantelwand des Magnetträgerabschnitts (3a) und der dem Magnetträgerabschnitt (3a) zugewandten Rückseite des wenigstens einen Permanentmagneten (12) während eines Umspritzens des einteiligen Rotorformkörpers (3) mit dem Kunststoffmaterial (14).

8. Elektrischer Antriebsmotor (10) nach einem der Ansprüche 1 bis 7, **dadurch gekennzeichnet, dass** der Motorwellenabschnitt (3c) ein freies Wellenende aufweist, dass zur Lagerung eines Laufrades auf dem Motorwellenabschnitt (3c) ausgebildet ist und eine Rändelung und/oder wenigstens eine Abflachung (17) an der Mantelwand des Wellenendes aufweist, zur drehfesten Lagerung des Laufrades auf dem Motorwellenabschnitt (3c).

9. Elektrischer Antriebsmotor (10) nach einem der Ansprüche 1 bis 8, **dadurch gekennzeichnet, dass** der Motorwellenabschnitt (3c) als eine Hohlwelle ausgebildet ist, die zur Bildung eines koaxialen Strömungskanals an den gegenüberliegenden Wellenenden des Motorwellenabschnitts (3c) jeweils eine Öffnung (16.1,16.2) aufweist.

10. Nassläufer-Pumpe (6), aufweisend eine Pumpenkammerwand, die einen Nassraum der Nassläufer-Pumpe (6) begrenzt, ein im Nassraum drehbar gelagertes Pumpenrad und einen das Pumpenrad antreibenden elektrischen Antriebsmotor (10) nach einem der Ansprüche 1 bis 9.

11. Nassläufer-Pumpe (6) nach Anspruch 10, **dadurch gekennzeichnet, dass** das Pumpenrad auf dem Wellenende des Motorwellenabschnitts (3c) des einteiligen Rotorformkörpers (3) befestigt ist.

12. Haushaltsgerät, insbesondere Geschirrspülmaschine, Waschmaschine, Trockner oder Dunstabzugshaube, aufweisend einen elektrischen Antriebsmotor (10) nach einem der Ansprüche 1 bis 9 und/oder eine Nassläufer-Pumpe (6) nach Anspruch 10 oder 11.

## Claims

1. Electric drive motor (10), having a stator (1) with at least one electrically actuatable stator winding (1a) and a rotor (2) which is mounted in a rotationally drivable manner in the field of the at least one actuatable stator winding (1a) so as to leave free an annular gap (9), having a motor shaft (3c) and a magnet carrier (3a), which is arranged coaxially in relation to the motor shaft (3c) and has at least one permanent magnet (12) which is arranged on an outer periphery of the magnet carrier (3a), wherein the motor shaft (3c) and the magnet carrier (3a) are of integral design by way of the motor shaft (3c) and the magnet carrier (3a) being jointly produced from an individual initial metal sheet to form an integral shaped rotor body (3) by means of deformation, **characterised in that** the deep drawing manufacturing method is used for deformation purposes and that the integral shaped rotor body (3) has a motor shaft section (3c) formed by deep drawing and a magnet carrier section (3a) formed by deep drawing, wherein the integral shaped rotor body (3) has a connecting section (3b) formed by deep drawing, which connects the motor shaft section (3c) to the magnet carrier section (3a) as an integral design.

2. Electric drive motor (10) according to claim 1, **characterised in that** the motor shaft section (3c) is joined to the magnet carrier section (3a) at an axial end face of the integral shaped rotor body (3) and the magnet carrier section (3a), starting from this axial end face, extends at least essentially coaxially to the axis of the motor shaft section (3c).

3. Electric drive motor (10) according to one of claims 1 or 2, having a separately produced magnetically conducting supplementary ring (13), which is fastened to the surface of the magnet carrier section (3a) and on which the at least one permanent magnet (12) is arranged.

4. Electric drive motor (10) according to one of claims 1 to 3, **characterised in that** the at least one permanent magnet (12) is fastened to the magnet carrier section (3a) by means of gluing by means of a magnetic adhesive.

5. Electric drive motor (10) according to one of claims 1 to 4, **characterised in that** the at least one permanent magnet (12) is fastened to the magnet carrier section (3a) by insert moulding of the integral shaped rotor body (3) by means of a plastic material (14).

6. Electric drive motor (10) according to one of claims 1 to 5, **characterised in that** the integral shaped rotor body (3) has at least one end-face side breakthrough (15), which forms an overflow opening, which is embodied for overflow of plastic material (14) from one side of the integral shaped rotor body (3) to an opposite side of the integral shaped rotor body (3) during an insert moulding of the integral shaped rotor body (3) with the plastic material (14).

7. Electric drive motor (10) according to one of claims 1 to 6, **characterised in that** the magnet carrier section (3a) and/or the magnetically conducting supplementary ring (13) has at least one pocket (18a) and/or a recess (18b), which each form a flow channel for conveying plastic material (14) into a gap between an outer surface wall of the magnet carrier section (3a) and the rear side of the at least one permanent magnet (12) facing towards the magnet carrier section (3a) during an insert moulding of the integral shaped rotor body (3) with the plastic material (14).

8. Electric drive motor (10) according to one of claims 1 to 7, **characterised in that** the motor shaft section (3c) has a free shaft end, which is embodied for bearing a running wheel on the motor shaft section (3c) and has knurling and/or at least one flat portion (17) on the outer surface wall of the shaft end, for torsion-proof bearing of the running wheel on the motor shaft section (3c).

9. Electric drive motor (10) according to one of claims 1 to 8, **characterised in that** the motor shaft section (3c) is embodied as a hollow shaft, which for forming a coaxial flow channel at the opposite shaft ends of the motor shaft section (3 c), has an opening (16.1, 16.2) in each case.

10. Wet rotor pump (6), having a pump chamber wall that delimits a wet space of the wet rotor pump (6), a pump wheel mounted rotatably in the wet space and an electric drive motor (10) driving the pump wheel, according to one of claims 1 to 9.

11. Wet rotor pump (6) according to claim 10, **characterised in that** the pump wheel is fastened to the shaft end of the motor shaft section (3c) of the integral shaped rotor body (3).

12. Household appliance, in particular a dishwasher, washing machine, dryer or extractor hood, having an electric drive motor (10) according to one of claims 1 to 9 and/or a wet rotor pump (6) according to claim 10 or 11.

## Revendications

1. Moteur d'entraînement électrique (10), comprenant un stator (1) qui comprend au moins un enroulement de stator (1a) commandable électriquement, et un rotor (2) logé de sorte à pouvoir être entraîné en rotation dans le champ de l'au moins un enroulement de stator (1a) commandable en ménageant un interstice annulaire (9), comprenant un arbre de moteur (3c) et un porte-aimant (3a), lequel est disposé coaxialement à l'arbre de moteur (3c) et comprend au moins un aimant permanent (12) qui est disposé sur une périphérie extérieure du porte-aimant (3a),
dans lequel l'arbre de moteur (3c) et le porte-aimant (3a) sont réalisés d'une seule pièce, et
l'arbre de moteur (3c) et le porte-aimant (3a) sont fabriqués conjointement à partir d'une tôle initiale unique par formage en un corps moulé de rotor (3) monobloc,
**caractérisé en ce que** le procédé de fabrication d'emboutissage profond est utilisé pour le formage et **en ce que** le corps moulé de rotor (3) monobloc comprend une section d'arbre de moteur (3c) formée par l'emboutissage profond et une section de porte-aimant (3a) formée par l'emboutissage profond,
dans lequel le corps moulé de rotor (3) monobloc comprend une section de liaison (3b) formée par l'emboutissage profond, qui relie d'une seule pièce la section d'arbre de moteur (3c) à la section de porte-aimant (3a).

2. Moteur d'entraînement électrique (10) selon la revendication 1, **caractérisé en ce que** la section d'arbre de moteur (3c) est reliée à la section de porte-aimant (3a) au niveau d'une extrémité frontale axiale du corps moulé de rotor (3) monobloc et la section de porte-aimant (3a) s'étend à partir de cette extrémité frontale axiale au moins essentiellement coaxialement à l'axe de la section d'arbre de moteur (3c).

3. Moteur d'entraînement électrique (10) selon l'une des revendications 1 ou 2, comprenant un anneau additionnel (13) magnétiquement conducteur, fabriqué séparément, qui est fixé sur la surface de la section de porte-aimant (3a) et sur lequel l'au moins un aimant permanent (12) est disposé.

4. Moteur d'entraînement électrique (10) selon l'une des revendications 1 à 3, **caractérisé en ce que** l'au moins un aimant permanent (12) est fixé par collage au moyen d'une colle magnétique sur la section de porte-aimant (3a).

5. Moteur d'entraînement électrique (10) selon l'une des revendications 1 à 4, **caractérisé en ce que** l'au moins un aimant permanent (12) est fixé sur la section de porte-aimant (3a) par enrobage par injection du corps moulé de rotor (3) monobloc au moyen d'un matériau plastique (14).

6. Moteur d'entraînement électrique (10) selon l'une des revendications 1 à 5, **caractérisé en ce que** le corps moulé de rotor (3) monobloc comprend au moins une percée frontale (15), qui forme un orifice de trop-plein qui est configuré pour écouler un matériau plastique (14) à partir d'un côté du corps moulé de rotor (3) monobloc jusqu'à un côté opposé du corps moulé de rotor (3) monobloc pendant un enrobage par injection du corps moulé de rotor (3) monobloc avec le matériau plastique (14).

7. Moteur d'entraînement électrique (10) selon l'une des revendications 1 à 6, **caractérisé en ce que** la section de porte-aimant (3a) et/ou l'anneau additionnel (13) magnétiquement conducteur comprend au moins une poche (18a) et/ou une cavité (18b), qui forme respectivement un canal d'écoulement pour transporter le matériau plastique (14) dans un interstice entre une paroi d'enveloppe extérieure de la section de porte-aimant (3a) et le côté arrière de l'au moins un aimant permanent (12) orienté vers la section de porte-aimant (3a) pendant un enrobage par injection du corps moulé de rotor (3) monobloc avec le matériau plastique (14).

8. Moteur d'entraînement électrique (10) selon l'une des revendications 1 à 7, **caractérisé en ce que** la section d'arbre de moteur (3c) comprend une extrémité libre d'arbre, qui est configurée pour loger une roue mobile sur la section d'arbre de moteur (3c) et comprend un moletage et/ou au moins un méplat (17) sur la paroi d'enveloppe de l'extrémité d'arbre, afin de monter la roue mobile de façon solidaire en rotation sur la section d'arbre de moteur (3c).

9. Moteur d'entraînement électrique (10) selon l'une des revendications 1 à 8, **caractérisé en ce que** la section d'arbre de moteur (3c) est configurée sous forme d'un arbre creux, qui comprend respectivement un orifice (16.1, 16.2) pour former un canal d'écoulement coaxial sur les extrémités d'arbre opposées de la section d'arbre de moteur (3c).

10. Pompe à rotor noyé (6) comprenant une paroi de chambre de pompe, qui délimite un compartiment humide de la pompe à rotor noyé (6), une roue de pompe montée en rotation dans l'espace humide et un moteur d'entraînement électrique (10) entraînant la roue de pompe selon l'une des revendications 1 à 9.

11. Pompe à rotor noyé (6) selon la revendication 10, **caractérisée en ce que** la roue de pompe est fixée sur l'extrémité d'arbre de la section d'arbre de moteur (3c) du corps moulé de rotor (3) monobloc.

12. Appareil électroménager, en particulier lave-vaisselle, lave-linge, sèche-linge ou hotte aspirante, comprenant un moteur d'entraînement électrique (10) selon l'une des revendications 1 à 9 et/ou une pompe à rotor noyé (6) selon la revendication 10 ou 11.
